# EUROPEAN PATENT APPLICATION

(11) **EP 3 270 303 A1**
(43) Date of publication of application: **17.01.2018**
(21) Application number: 17178460.6
(22) Date of filing: 28.06.2017
(51) Int. Cl.: G06F 17/30

(54) **AN AUTOMATED MONITORING AND ARCHIVING SYSTEM AND METHOD**

(30) Priority: 15.07.2016 US 201615212103
(71) Applicant: Teqmine Analytics Oy, 00240 Helsinki (FI)
(72) Inventor: TOIVANEN, Hannes, 00750 Helsinki (FI); SUOMINEN, Arho, 20540 Turku (FI)
(74) Representative: LEITZINGER OY

(57) **Abstract**

An object of the invention is an automated monitoring and archiving system. The system comprises means (100a) for processing a data amount to accomplish a structured collection data form, means (102) for automatically identifying documents in data warehouses comprising similar structured data forms as said structured collection data form, means for (104) defining monitoring criteria, and means (106) for automatically analyzing the identified documents on the basis of the defined monitoring criteria, and means for (108, 150, 152, 154) automatically archiving said analyzed documents in an electronic record keeping system.

## Description

### Field of the invention

The present invention relates generally to information management systems and tools for scientific and technological information, and more specifically it relates to data record maintaining and analysis systems.

### Background of the invention

Prior art data record maintaining and analysis systems comprise (1) electronic archival system for records considered relevant, (2) methods to monitor new information and automatically identify and archive records considered relevant, and (3) automated, semi-automated and non-automated analysis and archival system integrated in the (1) electronic archival system.

The need to identify relevant new scientific and technical information is common in research, business, government, as well as in the legal profession and in several other areas of society and economic life, and typically done in order to collect evidence to support decision making. The increasing volume of scientific and patent publications makes this increasingly difficult, especially because the accuracy and speed of information discovery are substantial elements for credible and useful decision making support.

In the U.S. alone, the number of first time publications of new patent applications or granted patents can exceed 10,000 records in a week, and is almost 400.000 per year in 2015, whereas in 2005 United States Patent and Trade Mark Office (USPTO) published about 200.000 new patent applications (USPTO, http://www.uspto.gov/web/offices/ac/ido/oeip/taf/us_stat.htm). The European Patent Office and the World Intellectual Property Organization publish also tens of thousands of new patent applications monthly, with a growth trend very similar to that of USPTO.

Volume and growth of publishing volume of new to the world scientific information present similar challenges. In 2014, about 3 million new scientific publications (articles, reviews, abstract, conference proceedings, etc.) were published, whereas in 2004 this number reached only about 1.6 million. (SCImago Journal & Country Rank, http://www.scimagojr.com).

The increasing volume of new scientific and patent publications presents an intensifying problem to identify, archive, and analyze relevant information accurately and in time-efficient manner, as well as in a manner that efficiently supports a wide range of analytic and decision support applications.

As a typical patent has in minimum title, abstract, 2-3 pages long description, but which can easily exceed several tens of pages and go up to hundreds of pages, as well as claims section and other relevant information, it is practically impossible with human intelligence and human labor to effectively screen new scientific and patent publications in timely manner and identify relevant records for archiving or further analysis. The increasing custom to publish or make publicly available research materials, data sets, experimental results, computer models and other scientific, technical and experimental material and information is expounding the difficulty to monitor, identify and keep records of relevant scientific and technical information.

Such effective screening or monitoring of new scientific and patent information for record keeping and analysis is important for a number of reasons, such as the maintenance and policing of one's intellectual property rights, to support the creation of new scientific publications or patent applications, investment and business decision, legal proceedings, and in general to generate technological and business intelligence for various purposes.

A range of computer implemented methods, systems, tools and approaches have been proposed to solve different elements of this problem as is discussed in detail below, yet no other invention has been proposed directly to focus on the computer implemented automated identification and archiving of relevant records from large or very large volume of new information within a system that comprises also automated, semi-automated or non-automated (semi-automated and non-automated meaning here a combination of artificial intelligence and human intelligence) tools for possible further verification of relevance of records and archival of the said records, as well as automated, semi-automated and non-automated analysis tools.

A common approach to monitor new technical and scientific information is to use non-automated or semi-automated queries to identify relevant information from data warehouses, databases, or other storages or flows of technical and scientific information. In this approach, a human builds independently or assisted by a computer program a query with the objective to identify potentially relevant records from large or very large volume of new records and with methods that allow the saving of the said identified records to another archive, list or other form of record keeping. Such query is typically built to target one or multiple of the content fields of a record or its meta-data. Most common examples of such queries are key word strings, e.g. implemented with Boolean operators, that query text fields (title, abstract, description, citations, references, claims, key words, authors, applicants, author organization, assignee, address information, etc.). Another query strategy is to rely on classification meta data, which can range from the broad field of patent or scientific record to very detailed classification of the field of the scientific matter or invention. In case of scientific information this is usually journal classification, library classification schemes codes, article subject matter classification, and so forth. Most recognized examples of such classification systems are the Universal Decimal Classification, Web of Science journal and article level classification systems, as well as PubMed classification system for health, medical, public health and biotechnology information. In the case of patent information, most recognized examples of such classification systems is the International Patent Classification (IPC), established by the Strasbourg Agreement in 1971 and with the intention to provide "hierarchical system of language independent symbols for the classification of patents and utility models according to the different areas of technology to which they pertain." (http://www.wipo.int/classifications/ipc/en/) Several other patent classification schemes exist, such as one maintained and followed by the USPTO, called the United States Patent Classification (UPC). Likewise the European Patent Office has followed in classification its European Classification (ECLA) and Japanese Patent Office has had its own classification scheme, and it is an on-going effort to coordinate these classifications via several mechanisms, including the Cooperative Patent Classification implemented by the USPTO and EPO.

Several problems plague efforts to monitor large volume of new information with above described query methods. First, formulation of effective query requires substantial work effort and expertise in science and technology, practical knowledge of the evolution and contemporary text corpus within defined scientific and technological fields, classification of scientific and technological information, as well as advanced expertise in query techniques. Because of this, query building can be time consuming and relatively expensive.

Secondly, queries rarely if ever return "perfect" results. Typically, queries return much too much information, most of the records irrelevant and making it very difficult, time consuming and expensive to query again or browse the pool of records returned by the query. Another typical result is much too small number of records and leading to a conclusion by anybody with sufficient expertise in the scientific or technological field that too many relevant records have been excluded due to too tightly or narrowly construed query.

Thus, query building is often a process of calibration, where human person works through trial and error experimenting with different query techniques, and ultimately satisfies with one that produces intuitively satisfactorily result. Because such query building is a mix of well documented process (the query string and process itself) and non- or poorly documented process, i.e. the human cognitive processing applied to evaluate the quality of different queries, prior art query building is often more intuitive human search process rather than well documented, transparent and logical exercise.

Third category of problems emerge with the application of subject matter classification schemes, such as technology classifications in technologies. The reliability of such classification schemes depends on the accuracy and precision of the people who assign classifications to records, and it is possible that systematic differences in classification practices persist at different national patent offices, within different departments of a single patent office, as well as between different persons working in same department. Random mistakes are possible, such as misspelled terms or characters, as well as negligence. Although scientific and technology classifications by and large can be held reliable, they do suffer from obvious reliability problems.

A well-documented problem with scientific and technological classification schemes is that they are historical, making them valid for identifying and classifying established bodies of knowledge, but less equipped and credible in recognizing and classifying completely novel bodies of scientific and technological information. They are, in essence, classification systems derived from historical insight but applied to new to the world information. A classic example of this difficulty is the emergence of range of nanotechnologies, as well as the historical introduction of electronic information processing and its sub-technology categories altogether.

Furthermore, classification schemes are very large and complex. The IPC comprises 8 main categories and over 70.000 detailed descriptions, which are often applied in conjunction with several other classification schemes. Again, query building with their aid can be time consuming and require substantial expertise, and easily suffers from too large or narrow results.

Fourth category of problems is the quality of results. Targeted queries find only what the search query is built to look for, and thus suffer from the "streetlight effect". In this classic problem statement of psychology of search, also known as observational bias, a policeman sees a drunken man searching for something under a streetlight and asks what the drunk has lost. He says he lost his keys and they both look under the streetlight together. After a few minutes the policeman asks if he is sure he lost them here, and the drunk replies, no, and that he lost them in the park. The policeman asks why he is searching here, and the drunken replies: "This is where the light is."

In search for scientific and technological intelligence, this phenomenon leads people to build queries from elements that they are familiar with, and neglect or are ignorant of alternative solutions. To this end, various computer implemented methods have been invented and proposed to increase the probability of discovery of relevant records. Such methods and tools include "semantic search", advanced query techniques that flexibly narrow or expand searches, "smart searches" that suggest relevant fields based on probability models build from analysis of citation and co-citation networks, probability models build from analysis of technology or field of science classifications, natural language processing of abstracts or titles, and so forth. Yet, all these query methods require as a starting point narrow subject matter definition that reduces the dimensions of the search problem into relatively few, well defined (and established) features.

US8266148 (B2) 'Method and system for business intelligence analytics on unstructured data' discloses a method to analyze and classify unstructured data for business intelligence and analytics purposes. It includes a range of unsupervised, semi-supervised and human implemented classification and analysis functions, but instead of focusing on solving the problems of monitoring effectively very large number of specific information records for record-keeping purposes, it's main focus is the production of specific business intelligence oriented key performance indicators.

US2011022941 (A1) 'Information Extraction Methods and Apparatus Including a Computer-User Interface' discloses a system with the aim of reducing the effort required by human curator to create a collection of documents of interest in a database from a large amount of data.

US2016148327 (A1) 'Intelligent Engine for Analysis of Intellectual Property' discloses another solution to structure patent information into a database and subject this data for a range of analytic operations, including content analysis with topic modelling and other natural-language-processing approaches.

However, these prior art techniques continue to suffer from the disadvantage of requiring substantial amount of human curating in establishing user-defined ontology (training), search strategy (such as key word or other) or classification scheme and other analytic processing methods that will satisfactorily identify records, and especially they suffer from batches of new records, of relevance for the user. Furthermore, their technical focus is to automate content analysis to create suggestions, identify areas of potential interest or generate different type of estimates of risk, value and other issues of interest for business entities, and pay no attention in methods of establishing an archive of relevant records.

### Short description of the invention

An object of the invention is an automated system and method to monitor continuously a large or very large volume of new publications (such as e.g. scientific publications and patents) to (1) automatically identify relevant records as defined by the user as reference documents using at least one of supervised, semi-supervised or unsupervised methods, and (2) to automatically store said identified records in an electronic record keeping system with (3) automated, semi-automated and non-automated analytic capabilities. This is achieved by an automated monitoring and archiving system. The automated monitoring and archiving system comprises processing means for processing a data amount to accomplish a structured collection data form, identifying means for automatically identifying documents in data warehouses comprising similar structured data forms as said structured collection data form, definition means for defining monitoring criteria, and analysis means for automatically analyzing the identified documents on the basis of the defined monitoring criteria, and archiving means for automatically archiving said analyzed documents in an electronic record keeping system.

The focus of the invention is also a method of an automated monitoring and archiving. In the automated monitoring and archiving method is processed a data amount to accomplish a structured collection data form, is automatically identified documents in data warehouses comprising similar structured data forms as said structured collection data form, is defined monitoring criteria, and is automatically analyzed the identified documents on the basis of the defined monitoring criteria, and is automatically archived said analyzed documents.

The invention is based on processing a data amount to accomplish a structured collection data form, and on automatically identifying documents comprising similar structured data forms as said structured collection data form. The invention is further based on defining monitoring criteria, and on automatically analyzing the identified documents on the basis of the defined monitoring criteria,

A benefit of the invention is that it eliminates described and other inherent prior art problems of customary search in scientific and technological information by utilizing computer implemented algorithms by combining their operation in a novel manner.

### Short description of the figures

- Figure 1: presents a flow chart presentation of the system according to the invention.

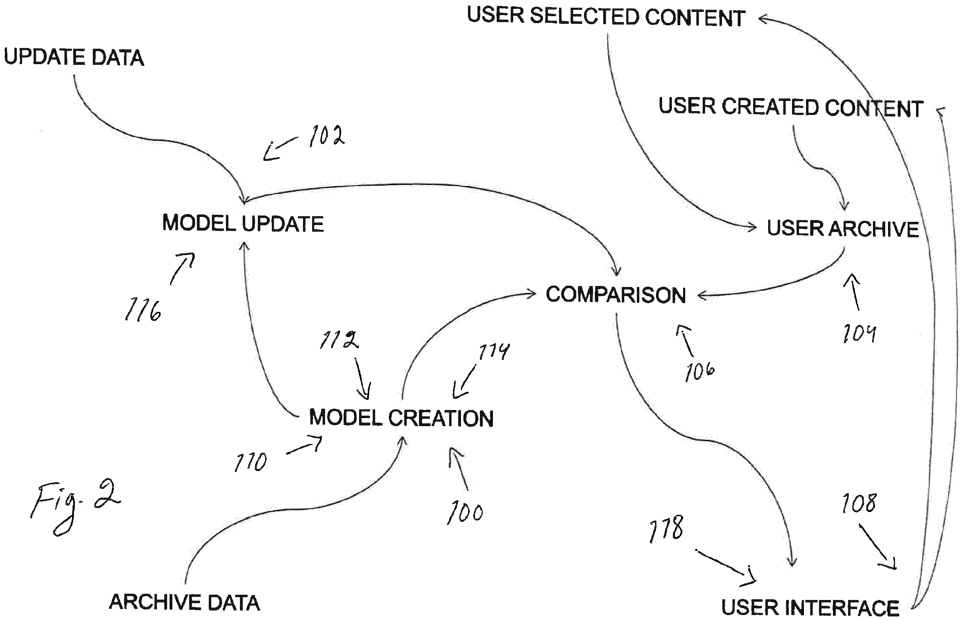

- Figure 2: illustrates the method according to the invention.

### Detailed description of the invention

Techniques according to the present invention make use of a collection of data relating to science and technology developments to create a system and method of continuously monitoring user selected or created information against science and technology advancements. A collection of data can be any structured or unstructured data source with information relating to science and technology development. Examples of data that can be used are patent data, news data and science publications, and can also include data of scientific and technological information, research material databases, experimental research data, visual material, audio and video collections but are not limited to these.

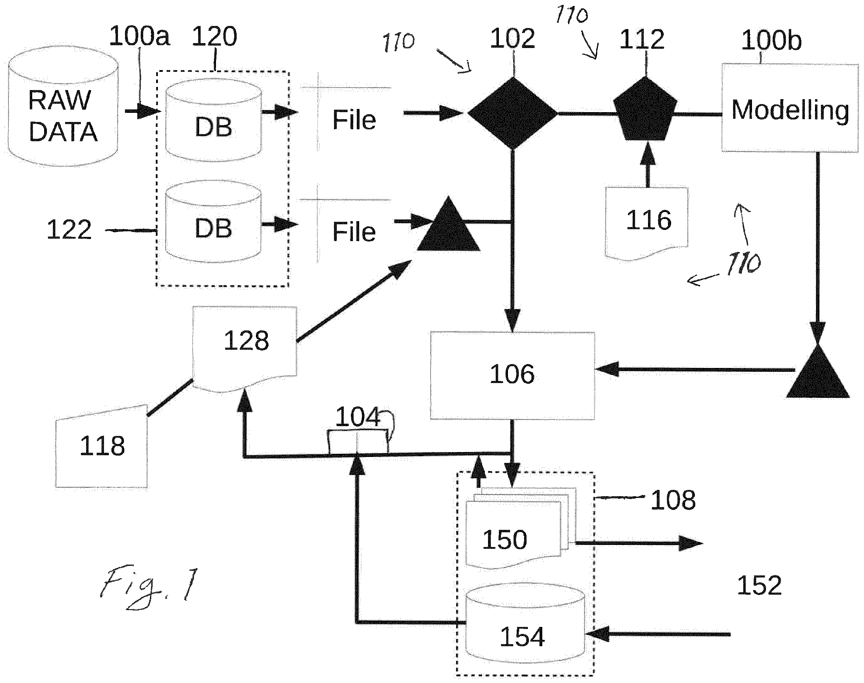

In figure 1 is presented a flow chart presentation of the system according to the invention. The automated monitoring and archiving system according to the present invention comprises means 110 for processing a data amount to accomplish a structured collection data form. A collection of data can be sourced from publicly available data in structured format or web harvested. Data can also be sourced from proprietary format. Raw data is structured to a collection that can be structured to a flat file or a database 120. The data amount can be for example a collection of documents. The system can comprise means 110 for structuring the collection data form e.g. to meta information and textual data describing the content of a source document. The data collection can be structured to meta information and semantic text, figures, tables, video and/or audio describing the content of a record. The automated monitoring and archiving system according to the present invention comprises means 102 for automatically identifying documents comprising similar structured data forms as said structured collection data form. The user can define identification models to a reference document database 122. The system can also comprise a storage for reference documents in a file mode.

The system according to the present invention can comprise means 112 for preprocessing in the case of textual data by using at least one method of sentence boundary detection, part-of-speech assignment, morphological decomposition of compound words, chunking, problem-specific segmentation, named entity recognition, grammatical error identification and recovery methods to reduce the complexity of the collection of documents.

The automated monitoring and archiving system comprises means 100b for modelling the collection data form by using at least one of an unsupervised, semi-supervised and supervised classification algorithm to accomplish a model of the collection data form. Examples of algorithms used are support vector machine, expectation-maximization, probabilistic semantic indexing and latent dirichlet allocation. The system can comprise means 116 for updating the collection data form to accomplish a new model by inferencing new data to the collection data form. The update models can subsequently be merged with the initial models.

The user can select documents from the collection or create documents included into the monitoring systems as records. The selected or created documents (later user records) are compared by classification using the model collection of documents. The comparison results in a similarity index value for each user document. The system creates a link between each user record and collection document. The link is weighted based on the similarity index of the two documents. The link data can be stored in in a result table that can be a file, database or database table. The system according to the present invention comprises means for 104 defining monitoring criteria, and means 106 for automatically analyzing the identified documents on the basis of the defined monitoring criteria. The system can also comprise a data file 128 for information on what similarities are in process. Said data file 128 can be linked to reference documents 122 process and/or to the automatic analyzation process 106.

The system according to the present invention further comprises means for 108 automatically archiving said analyzed documents in an electronic record keeping system. In one embodiment according to the present invention the automated monitoring and archiving system 108 can comprise means 152 for performing automatic sub-archiving of the automatically analyzed identified documents. The automated monitoring and archiving system can be configured to operate as an independent identification and archiving robot by utilizing artificial intelligence and algorithm techniques. In one further embodiment the system can also comprise means 118 for integrating human analysis to the automatic analysis of the identified documents.

As new models or model updates based created based on the collection or collection updated, the similarity index values are automatically updated for each user record selected for monitoring. The system creates a link between each user document and collection document. The link is weighted based on the similarity index of the two documents. Using a system assigned or user selected similarity index threshold the process excludes low-scoring user record and collection document links from the result table.

The system according to the present invention can operate in an endless loop used for the continuous monitoring. Loop includes iterations where new or modified data can be included in the collection 120 (figure 1) resulting in model updates and new or modified user records 122 resulting in similarity index calculations. A termination condition for the loop can be set.

In the specific case that user created user records, the user can be directed to create a semantic description suitable for similarity indexing. The user is given a textual description of the type of text that can be included as user record. This textual description can also include an online form or a template file directing the user's interaction. Prior to similarity comparisons, user records are preprocessed. Preprocessing follows the preprocessing steps used to preprocess the collection. The user created user records are processed by weighting user identified keywords. The user can select user records from the collection, the records are copied as is or as a link from the collection to the user records and included in the similarity indexing process.

In the following is described more detailed embodiments according to the present invention.

Machine readable data can be stored in unstructured data warehouse, and transferred from there into structured data stored in data warehouse or in database. In one embodiment of the invention, patent publication data issued by Patent Office (e.g. USPTO, EPO or WIPO) in XML-format and including Portable Document Format (pdf) or images (such as .jpg or .tiff format) are obtained over the Internet from an FTP-server or other server of provided by the Patent Office and stored at a local computer or computer server or stored at a cloud-based server, such as offered as a service by Amazon or Microsoft or by several other service providers. Data downloading or harvesting is implemented with a software robot that operates in endless loop, or in batch-operation mode.

Data to be stored at the unstructured and structured data warehouse can also include data on scientific publications. Examples of such would be electronic files containing full publication information that several scientific publishers, such as Elsevier, Routledge, Francisc&Taylor, as well as several journals, such as PlosOne, generate and maintain for all publications published through their publishing systems.

Other types of data that can be stored at data warehouse can include research material and research data. This includes research datasets, research material, experimental data, or biological information data and other scientific and technical data deposited in research databases or research material platforms, such as www.researchgate.org, www.academica.edu or at the Mendeley Service. Such datasets can be, for example, genomic data, statistical data, patient data, experiment result data and so forth.

Furthermore, scientific and technological data can be harvested or downloaded to the data warehouse from various electronic sources, such as blogs, publicly shared MS Powerpoint or PDF presentations and materials, and data can also be harvested from various open repositories, such as Mendeley, Google Scholar, Google Patents, Academia.Edu, www.researchgate.org, as well as from publication repositories maintained by universities, research organizations, governments, and other organizations. Examples of such institutional public science and technology repositories are the various universities (e.g. https://smartech.gatech.edu/, which includes in 2016 more than 40,000 Georgia Tech theses and dissertations in full-text). Data can also be obtained from websites that host information on academic courses or course materials.

Additionally, data can be harvested from science and technology conference websites, where often abstracts, proceedings and presentation materials are made publicly available over the Internet. Data can also include audio and visual electronic data, for example videos or recordings of presentations at scientific or technological conferences or other venues. Data can also be reports, books, academic dissertations, and so forth. Data sources can include other sources than those previously listed.

Data for the unstructured and structured data warehouse can also be obtained confidentially in a manner where it is subsequently made available only for selected users or parties. For example, a large and R&D intensive company could provide as a data its own internal, confidential and non-disclosed research reports and materials to be included in the data warehouse and subsequent modelling, monitoring and analysis. One reason for such action would be to detect easily and accurately if anybody or any firm would attempt to obtain a patent on an invention that the firm has documented prior-art, and the firm would like to prevent the grant of such patent.

The data can consist of back-file and updates. In one embodiment, the back-file consists of the historical full-text patent publication data including images and pdf-files of original patent publications issued by EPO, USPTO or WIPO since 1978. Updates consist of the weekly publications by EPO, USPTO and WIPO of new patent publication data. Another embodiment of the back-file would include the electronic scientific publication data that is available from ThomsonReuters (Web of Science), Elsevier (Scopus), PubMed and several other scientific publishing houses. This includes also publication record data from individual journals, such as PlosOne and several other Open Science journals, as well as publication level electronic information that can be obtained from Open Access articles at journals otherwise maintaining paywall. In each of these embodiments, as well as in other embodiments, there exists a clear historical data set that can be downloaded or saved to data warehouse, and there exist regular or irregular updates to the dataset.

The data can consist of only one-time data. For example, publications or files from a scientific conference that will not have succession conferences or publication data from a book that will be published without a sequel.

The downloaded data, consisting in one embodiment of the invention of patent publications are stored in data warehouse in .xml, .pdf and .tiff format electronic publications are parsed by using a specifically developed parsing script into structured data format, and stored in the computer. Other embodiments can include any electronic and machine readable file formats. In one embodiment, the parsed data is loaded in structured relational database, such as MySQL, MariaDB, Microsoft Server SQL or other known database format. The database will identify all publication level data by using the official identification tags, such as publication number or application number other known official identification tags, and can also include identification tags added to records during the parsing process or when loaded in the database.

The downloaded data can also be structured and stored in the original or new data warehouse. In this embodiment, the files are stored in data warehouse in structured and logical archive and with necessary file identifications so that publication information and meta-information can be retrieved efficiently to be displayed at graphical user interface for users, or to be retrieved efficiently for text or data mining, or for modelling. Data can also be stored in several dedicated data warehouses by its origin, date or kind or by other features.

The database consisting of the patent publications of an issuing office, such as EPO, USPTO or WIPO, may include all publicly available information and meta information, such as title, abstract, full-text description, claims, applicant, assignee, technology classifications, inventor names and addresses, kind, publishing country, priority date, application date, publication date, assignee and legal changes, search reports, cited patent and non-patent literature, and so forth.

Data on patent publications can also include data generated by using other databases, such as the EPO maintained DOCDB master documentation database, EPO issued, PATSTAT database or EPO Worldwide Legal Status Database INPADOC, or other patent databases and can consist of, for example, backward and forward citation counts, patent family information, and so forth. Patent publication data can also be enhanced with EPO maintained INPADOC information about the legal status of the patent publication, for example if it has been granted, in which country it has been granted, or its possible lapse due to various reasons. Additional data can also include information on license agreements concerning the patent publication, as well as if patents have been recorded as 'notified patents' in established industry standards, such as in common in the ICT industry.

Data on patent publications can also be enhanced by generating information not publicly available, such as machine-generated or human expert evaluations about their novelty (e.g. based on patent citation count or expert opinion), machine-generated or human expert assigned information about the technical or business field of the patent publication, information about legal events, such as infringement or other legal challenges, patent portfolio analysis, and so forth. The reason to add such information on patent publications would be to facilitate patent publication search or to enable financial or other technical analysis of large data sets.

The structured data warehouse or database can be optimized for various user purposes. A major reason would be to enable effective text and data mining that would be enabled by indexing of the data, and a range of traditional search methods. This is done by using the basic indexing commands available in MySQL, MariaDB and other databases. Additional search facilitating indexing is done by implementing Lucene Search Index or Elastic Search in the database to enable effective text search and text-mining capabilities.

In the embodiments according to the present invention is made use of a collection of data relating to science and technology developments to create a system and method of continuously monitoring user selected or created information against science and technology advancements. A collection of data can be any structured or unstructured data source with data relating to science and technology development. Examples of data that can be used are patent data, news data and science publications, and can also include data of scientific and technological information, research material databases, audio and video collections but are not limited to these.

A collection of data can be sourced from publicly available data in structured format or web harvested. Data can also be sourced from proprietary format, such as privately held collection of technological records by an organization. In one embodiment, such records is a collection of invention disclosure by a corporation, which are used as documents to search and monitor for relevant scientific and patent publications with the method and system disclosed herein. Raw data is structured to a collection that can be structured to flat file or a database. The collection is structured to meta information and semantic text, figures, tables, video and/or audio describing the content of a record.

In one embodiment, the collection of data is sourced in raw data format from data providers which are the patent administrative offices i.e. United States Patent and Trademark Office, European Patent Office or WIPO. The data files are read, cleaned and written to a data warehouse that is a database. In one embodiment, the natural language description of the invention is extracted with a unique identifier from the database. The semantic text of one more several collections of data is used to create a model reducing the dimensionality of the text. This model can be known or future supervised, semi-supervised or unsupervised learning method, in on embodiment this is Latent Dirichlet Allocation. During the model creation process, files describing the created model, each document in the model and the data of publication of the last document are stored in the system. As the data provider or other sources makes new data available for the same collection of data, new data is added to the existing data warehouse. Using the date of last document modeled, the system extracts documents not previously modeled from the database and by using inference creates values for each new document in the model. The system also updates the publication data of the last document modeled. The process of updating is an infinite loop, where the user can set constraints on when new data is queried from the data provider and when values are created for new documents. The user can set a termination condition for the loop. In one embodiment, the termination condition for the loop is the ratio of new documents per the count of documents in the original collection of data. When the ratio increases above a constraint value set by the user, the whole collection is modeled again, creating a new model and starting a new loop of updates.

The model is created by a sequence of inputs, referred to as data, extracted from data structure at a given time. The data extracted can correspond to for example images, sound waveforms or textual information and is extracted based on the user choice of data and what is available in the data structure of a given data collection. The data is a sequence of inputs, where the sequence is controlled by the unique identifier given to each document when creating the data warehouse. The extracted data from the data structure can be preprocessed prior to analysis. The data serves as an input to a machine learning algorithm, which can be any known and future supervised, reinforced or unsupervised learning algorithm. With the model, the algorithm creates a soft or hard partitioning classifying each input sequence to one or multiple classes. The model produces a vector, length of one if hard partitioned and length the number of classes in soft partitioning, giving the class and/or probability of document belonging to one or more classes. Document classification is thereafter used to calculate a similarity index value between input documents and any new document introduced to the model. This can be done by for example identifying, in the case of hard partitioning, documents belonging to the same class, or, in the case of soft partitioning, by calculating the cosine similarity between all documents included into the model.

In one embodiment, the model is created using unsupervised learning via Latent Semantic Indexing (also known as the Latent Semantic Analysis) to model all of the USPTO issued patent text between 1978-2015, consisting of approximately 7 million records. In this, the sequence of inputs, patent documents, are controlled via a preprocessing phase where after data is classified using the algorithm. In addition to the input, the algorithm is given the number of classes the input is to be classified. The Latent Semantic Indexing algorithm produces a soft classification with each sequence of input being classified to multiple classes. Documents distribution in classes is thereafter considered as a vector and compared to each exiting and new document in the data structure by cosine similarity between vectors. In this one embodiment, the cosine similarity between documents is the similarity index value between two documents.

The preprocessing of documents prior to modeling cleans the sequence of inputs from character, terms and/or tokens that do not distinguish the content of the document but are relevant to the type of content. These are for example words not containing information about the content but create natural language, such as prepositions and punctuations, or sections of image that show only commonly used logos. In one embodiment, semantic text can be preprocessed to reduce the complexity of the collection of documents. Textual data can be preprocessed using methods such as, but not limited to, sentence boundary detection, part-of-speech assignment, morphological decomposition of compound words, chunking, problem-specific segmentation, named entity recognition or grammatical error identification and recovery methods. In the specific embodiment of patent text, semantic text can be further preprocessed to remove legal terminology pertaining to how patent text is written, such as removing "in this embodiment". In specific embodiment of publications text, semantic text can be further preprocessed to remove structures such as "all rights reserved" and "in this paper".

The user can select documents from the collection of data in structured data or other data made accessible, use documents identified or obtained from elsewhere (e.g. newspaper, scientific journal, blog post) or create documents (such as invention disclosures, drafts for scientific manuscripts or patent application drafts) to be used as reference documents for monitoring and analysis. A reference document embodies the scientific or technical area of interest for the user, and is included in the monitoring systems as records. The selected or created reference document or documents, as the invention allows the monitoring of unlimited number of reference documents, are compared by classification using the model collection of documents. The comparison results in a similarity index value for each user identified reference document. The system creates a link between each reference document and collection document. The link is weighted based on the similarity index of the two documents. The link data is stored in in a result table that can be a file, database or database table.

As new models or model updates based created based on the collection or collection updated, the similarity index values are automatically updated for each reference document selected for monitoring. The system creates a link between each reference document and collection document. The link is weighted based on the similarity index of the two documents. Using a system assigned or user selected similarity index threshold the process excludes low-scoring reference record and collection document links from the result table.

The system operates in an endless loop used for the continuous monitoring. Loop includes iterations where new or modified data can be included in the collection resulting in model updates and new or modified reference records resulting in similarity index calculations. A termination condition for the loop can be set.

In the specific case that user created reference documents, the user is directed to create a semantic description suitable for similarity indexing. The user is given a textual description of the type of text that can be included as user record. This textual description can also include an online form or a template file directing the users' interaction. Prior to similarity comparisons, user records are preprocessed. Preprocessing follows the preprocessing steps used to preprocess the collection. The user created user records are processed weighting user identified keywords.

In the specific case that the user selects reference documents from the collection, the records are copied as is or as a link from the collection to the user records and included in the similarity indexing process.

Results data can be integrated from data modelling and monitoring into graphical user interface (GUI). Data results from data modelling and monitoring (Similarity Index) are integrated into structured data or database to obtain full record level meta data. Results data is stored as additional structured data or, in one embodiment, inserted into MySQL or other relational data base table. By using record level unique identifiers, the records are connected to available meta and other data related to the said record.

This integration will enable human user to assess and access modelling results. Access to results is realized via graphical user interface (GUI) that allow the user to access and evaluate the modelling results. The GUI is implemented in established programming techniques, such as Java, and it accessible from computer devices connected to public or private Internet. The GUI is hosted on a computer server or cloud.

In one exemplary embodiment according to the present invention the GUI has several functionalities typical to large-scale databases, and it will allow the user to carry out indexed search in the structured data in its entirety, i.e. all data warehouse data is available.

In case of the integrated modelling results, the GUI has several dedicated features, such as automated reporting on the qualities of the results data. This includes the number of patent applications per year, listings of key assignees, inventors inventor cities etc. Data is provided in graphical report formats as is possible with the solutions provided by dedicated business intelligence software companies such as Vaadin Inc or Tableau Software. Data is provided also in table formats and the GUI allows the user to download graphs, tables or complete reports in different data formats.

The GUI includes user management system, and each user has access to a set of modelling results are provided with the privileges associated with that given user account or user group. The user account information privileges are connected to user account information associated with specific modelling results.

A user can browse, search, sort, filter and in different ways classify modelling results per all the data stored in structured data, such as publication date, publication number, technology class, inventor or author name, assignee, author organization. A dedicated indexed search engine, such as Lucene or Elastic search, will allow the user to carry out complex text based search, such as Boolean search. All search, filter and classification operations can be saved, scheduled and automated to be operated in infinite loop.

The user can save any record or number of records to specific lists to keep records for certain special interests. Lists are realized in structured data or in MySQL as special table, and linked to record level data via unique identifier. The lists are maintained, for example, to identify all patent publications where claims contain specific term of interest, or all patent publications of a given company or inventor, or all patents with a given technology classification(s). Such lists will be essential for a user to keep records for special areas of interest to be monitored, and they can be accumulated over time in indefinitely.

The user can also browse data and other information in the GUI by filtering results by the unique identification of reference document.

Automatic monitoring and archiving is realized at different levels of precision. In the first instance, automatic monitoring and archiving in the invention is realized by the modelling automatically selecting relevant records from the structured data and data updates for a reference document or multiple reference documents, which are estimated relevant and then automatically moved to the structured data so that a user can access them. However, such data may include too much of undesired data, and the user can add precision by using the filtering, search, and classification tools embedded in GUI.

Another level of precision is enabled by the creation of dedicated lists to keep records of certain records of interests. Such lists are created by automatically adding all records from the model and new updates that correspond to scheduled or automated search, filtering or classification created by the user. For example, by using functionalities of the GUI, the user may automate the process where by all patent publication records and new patent application records whose claims contain a specific term (e.g. thermoplastic) are included to a pre-defined list. The automated storing of records is realized as a scheduled and automated search using the indexed search and by storing all captured records automatically to a pre-defined list.

The user can also keep records and maintain archival system of them by manually carrying out search, filtering and classification of the modelling results with the functionalities of the GUI.

The user can also improve the quality of automated and semi-automated archived record keeping lists by manually verifying the quality of saved records and by removing undesired records from the list.

All reporting functions of the GUI can be adapted to display results, graphs or figures for the saved lists.

The presented means 100(a,b), 102, 104, 106, 108, 110, 112, 114, 116, 118, etc, for performing different kind of tasks according to the present invention can be carried out programmatically by utilizing e.g. algorithm techniques and/or programs by means of data processor techniques and data processors such as e.g. computers.

Thus, while there have been shown and described and pointed out fundamental novel features of the invention as applied to a preferred embodiment thereof, it will be understood that various omissions and substitutions and changes in the form and details of the invention may be made by those skilled in the art without departing from the spirit of the invention. For example, it is expressly intended that all combinations of those elements which perform substantially the same results are within the scope of the invention. Substitutions of the elements from one described embodiment to another are also fully intended and contemplated. It is also to be understood that the drawings are not necessarily drawn to scale but they are merely conceptual in nature. It is the intention, therefore, to be limited only as indicated by the scope of the claims appended hereto.

## Claims

1. An automated monitoring and archiving system, **characterized in that**, the automated monitoring and archiving system comprises:
- processing means (100a) for processing a data amount to accomplish a structured collection data form,
- identifying means (102) for automatically identifying documents in data warehouses comprising similar structured data forms as said structured collection data form,
- definition means (104) for defining monitoring criteria, and analysis means (106) for automatically analyzing the identified documents on the basis of the defined monitoring criteria, and
- archiving means (108, 150, 152, 154) for automatically archiving said analyzed documents in an electronic record keeping system.

2. An automated monitoring and archiving system according to claim 1, **characterized, in that** the data amount is collection of documents.

3. An automated monitoring and archiving system according to claim 1, **characterized, in that** the system comprises means (110) for structuring the collection data form to meta information and textual data describing the content of a source document.

4. An automated monitoring and archiving system according to claim 3, **characterized, in that** the system comprises means (112) for preprocessing the textual data by using at least one method of sentence boundary detection, part-of-speech assignment, morphological decomposition of compound words, chunking, problem-specific segmentation, named entity recognition, grammatical error identification and recovery methods to reduce the complexity of the collection of documents.

5. An automated monitoring and archiving system according to claim 1, **characterized, in that** the system comprises means (100b) for modelling the collection data form by using at least one of an unsupervised, semi-supervised and supervised classification algorithm to accomplish a model of the collection data form.

6. An automated monitoring and archiving system according to claim 1, **characterized, in that** the system comprises means (116) for updating the collection data form to accomplish a new model by inferencing new data to the collection data form.

7. An automated monitoring and archiving system according to claim 1, **characterized, in that** the automated monitoring and archiving system is configured to operate as an independent identification and archiving robot by utilizing artificial intelligence and algorithm techniques.

8. An automated monitoring and archiving system according to claim 1, **characterized, in that** the automated monitoring and archiving system comprises means (118) for integrating human analysis to the automatic analysis of the identified documents.

9. An automated monitoring and archiving system according to claim 1, **characterized, in that** the automated monitoring and archiving system comprises means (108, 150, 152, 154) for performing automatic sub-archiving of the automatically analyzed identified documents.

10. An automated monitoring and archiving system according to claims 7 and 9, **characterized, in that** the automated monitoring and archiving system is configured to operate as an independent analysis and sub-archiving robot by utilizing artificial intelligence and algorithm techniques.

11. An automated monitoring and archiving method, **characterized in that** in the automated monitoring and archiving method:
- is processed a data amount to accomplish a structured collection data form,
- is automatically identified documents in data warehouses comprising similar structured data forms as said structured collection data form,
- is defined monitoring criteria, and is automatically analyzed the identified documents on the basis of the defined monitoring criteria, and
- is automatically archived said analyzed documents.

12. An automated monitoring and archiving method according to claim 11, **characterized, in that** the data amount is collection of documents.

13. An automated monitoring and archiving method according to claim 11, **characterized, in** the method is structured the collection data form to meta information and textual data describing the content of a source document.

14. An automated monitoring and archiving method according to claim 13, **characterized, in that** the method is preprocessed the textual data by using at least one method of sentence boundary detection, part-of-speech assignment, morphological decomposition of compound words, chunking, problem-specific segmentation, named entity recognition, grammatical error identification and recovery methods to reduce complexity of the collection of documents.

15. An automated monitoring and archiving method according to claim 11, **characterized, in that** in the method is modelled the collection data form by using at least one of an unsupervised, semi-supervised and supervised classification algorithm to accomplish a model of the collection data form.

16. An automated monitoring and archiving method according to claim 11, **characterized, in that** the method is updated the collection data form to accomplish a new model by inferencing new data to the collection data form.

17. An automated monitoring and archiving method according to claim 11, **characterized, in that** in the method is performed system configuration to operate as an independent identification and archiving robot.

18. An automated monitoring and archiving method according to claim 11, **characterized, in that** in the method is integrated human analysis to the automatic analysis of the identified documents.

19. An automated monitoring and archiving method according to claim 11, **characterized, in that** in the method is performed automatic sub-archiving of the automatically analyzed identified documents.

20. An automated monitoring and archiving method according to claims 17 and 19, **characterized, in that** in the method is performed system configuration to operate as an independent analysis and sub-archiving robot by utilizing artificial intelligence and algorithm techniques.
